(19) Europäisches Patentamt

European Patent Office

Office européen des brevets

(11) **EP 4 024 085 B1**

(12) # EUROPEAN PATENT SPECIFICATION

(45) Date of publication and mention
of the grant of the patent:
**17.06.2026 Bulletin 2026/25**

(21) Application number: **19945633.6**

(22) Date of filing: **23.09.2019**

(51) International Patent Classification (IPC):
**G01S 17/95** $^{(2006.01)}$

(52) Cooperative Patent Classification (CPC):
**G01S 17/58; G01S 7/4814; G01S 7/4911;
G01S 7/4917; G01S 17/26;** Y02A 90/10

(86) International application number:
**PCT/CN2019/107358**

(87) International publication number:
**WO 2021/051423 (25.03.2021 Gazette 2021/12)**

(54) **PHASE ENCODING UNSATURATED MODULATION METHOD AND DEVICE, LASER RADAR RANGING AND SPEED MEASUREMENT METHOD AND LASER RADAR SYSTEM**

VERFAHREN UND VORRICHTUNG ZUR PHASENCODIERENDEN UNGESÄTTIGTEN MODULATION, VERFAHREN ZUR ENTFERNUNGSMESSUNG UND GESCHWINDIGKEITSMESSUNG EINES LASERRADARS UND LASERRADARSYSTEM

PROCÉDÉ ET DISPOSITIF DE MODULATION NON SATURÉE PAR CODAGE DE PHASE, PROCÉDÉ DE TÉLÉMÉTRIE ET DE MESURE DE VITESSE PAR CINÉMOMÈTRE LASER ET SYSTÈME DE CINÉMOMÈTRE LASER

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.09.2019 CN 201910886491
19.09.2019 CN 201921561613 U**

(43) Date of publication of application:
**06.07.2022 Bulletin 2022/27**

(73) Proprietor: **Beijing Taizhixin Technology Co., Ltd.
Beijing 100085 (CN)**

(72) Inventors:
• **LI, Cunhui**
**Beijing 101400 (CN)**
• **YAO, Jian**
**Beijing 101400 (CN)**
• **ZHANG, Shumin**
**Beijing 101400 (CN)**
• **FU, Xiaojin**
**Beijing 101400 (CN)**

(74) Representative: **Huang, Liwei
Cäcilienstraße 12
40597 Düsseldorf (DE)**

(56) References cited:
CN-A- 105 067 103          CN-A- 105 629 258
CN-A- 109 031 338          CN-A- 109 541 636
CN-A- 109 541 636          CN-A- 110 187 350
CN-A- 110 221 308          US-A- 3 849 780
US-A1- 2018 224 547        US-A1- 2019 011 558

• SHENG JIANFENG: "Signal Processing and
Performance Analyzing of Phase-coded Radar",
CHINESE MASTER?S THESES FULL-TEXT
DATABASE, INFORMATION SCIENCE AND
TECHNOLOGY, 20 June 2004 (2004-06-20),
XP055793230
• SHENG JIANFENG: "Signal Processing and
Performance Analyzing of Phase-coded Radar",
CHINESE MASTER'S THESES FULL-TEXT
DATABASE, INFORMATION SCIENCE AND
TECHNOLOGY, 20 June 2004 (2004-06-20),
XP055793230

## Description

## Technical Field

The present invention relates to the field of lidar, and in particular to a phase-coded unsaturated modulation method, apparatus, lidar distance and velocity measurement method and lidar system.

## Background

Pulse compression is an important system of modern radar, which effectively solves the contradiction between distance resolution and average power of radar and is widely used in modern radar. There are three types of typical pulse compression signals: linear frequency modulation (LFM) signals, nonlinear frequency modulation (NLFM) signals and phase coded (PSK) signals, among which phase coded signals are widely used because of their large main lobe to side lobe ratio and good compression performance in the case of small time-bandwidth products, and because phase coded uses pseudo-random sequence signals, it is easy to realize signal "agility", which is conducive to improving the interception resistance of radar systems, but the shortcoming is that in the process of pulse compression of the target echo signal, the phase coded signal will make the echo signal subject to Doppler modulation due to the target and the platform, as well as the frequency change of the seed laser carrier during the round-trip time of the radar signal, due to the existence of relative motion Doppler of the platform and target, the matched filter function becomes completely mismatched, and the phase-coded signal cannot obtain the relative distance information between the target and the platform through the pulse compression process, the phase-coded signals are Doppler sensitive, and the pulse compression performance will be seriously affected when the Doppler frequency shift exists in the echo signal, therefore, it is necessary to compensate for the Doppler caused by the relative motion between the target and the platform, especially in the case of high carrier frequency, large Doppler frequency shift of the relative motion of the target and poor stability of the seed laser frequency, such as lidar. Therefore, there is a need to improve the existing technology to effectively solve the Doppler sensitivity problem of conventional phase-coded signals, and at the same time to achieve the measurement of the relative motion velocity of the target.

CN 109541636 A discloses a non-blind area high-range resolution laser radar wind measurement system and method. A laser is connected to an electro-optical phase modulator and an acousto-optic frequency shifter through a first coupler; the electro-optic phase modulator, the fiber amplifier, the circulator and the telescope are sequentially connected. The telescope is connected to a second coupler through a circulator; the acousto-optic frequency shifter, the second coupler, a balance detector, an amplifier, a dual-channel AD collection card and a computer are sequentially connected; a sinusoidal signal generator is connected to the acousto-optic frequency shifter; an arbitrary waveform generator is connected to the dual-channel AD collection card and an electro-optical phase modulator; and an external trigger is connected to the arbitrary waveform generator and a dual-channel AD collection card. Through combination of the pseudo-random code phase modulation technology and the heterodyne detection technology, the system works under the wide pulse width and the low peak power to obtain the profile wind speed information at the non-blind area with a high-range resolution through adoption of the algorithm of removing an end face signal influence. A non-patent literature "Signal Processing and Performance Analyzing of Phase-coded Radar" published by SHENG JIANFENG in June, 2004, discloses three methods for solving the problem of higher range sidelobe. The first one is the subtraction in time field based on parameter estimation, the second one is the subtraction in time field based on adaptive filter, and the third is eigensubspce projection. The three methods can suppress the sidelobe ideally, and have a good effect on mufti-signal processing at one range gate. At the same time, the ambiguity function and performance guideline between PBRC CW and RBRC CW are analyzed and compared.

## Summary

The purpose of the present invention is to overcome the defects of the prior art, and to provide a phase-coded unsaturated modulation method, apparatus, lidar distance and velocity measurement method and lidar system, which adopt the phase unsaturated modulation method to make the modulated laser signal simultaneously have a single-frequency component and a phase-coded modulation components, of which the single-frequency component can be used to obtain the relative motion velocity between the platform and the target and to compensate for the frequency drift of the seed laser. The obtained relative Doppler frequency is used to construct a matched filter function to perform pulse compression of the phase-coded signal, and further to obtain the distance information between the target and the platform.

The solution in the present invention is: a phase coded unsaturated modulation method for phase coded modulation of a single frequency laser, wherein the phase coded modulation is two-phase or multi-phase, and modulation depth is phase unsaturated modulation;

when the phase coded modulation is a two-phase code, the signal modulation is:

$$Sig(t) = A \exp\left[ j(2\pi f_0 t + \varphi(t)) \right]$$

$$\varphi(t) = (n \pm \eta)\pi$$

wherein *Sig(t)* is an output laser modulated signal, *A* is the amplitude of the laser signal, $f_0$ is the carrier frequency of the laser, $\varphi(t)$ is the phase modulated signal, *n* is an integer, $\eta$ is 0.2 ~ 0.8.

Further, after the phase coded unsaturated modulation, the laser signal comprises a single-frequency spectral component and a phase coded modulated broadband spectral component with the same or close energy ratio, wherein the phase coded modulated broadband spectral component is a phase coded spectral component.

Further, the energy ratio of the single-frequency spectral components is 40%-60%.

The present invention further provides a phase coded unsaturated modulation apparatus for implementing the above phase coded unsaturated modulation method, comprising: a laser generator, a laser phase modulator and a signal generator, the laser generator is arranged to emit a single frequency laser, the laser emitting end of the laser generator is connected to the optical input of the laser phase modulator, the signal generator is arranged to generate a phase coded modulated electrical signal, the electrical signal output of the signal generator is connected to the signal input of the laser phase modulator, said single frequency laser is phase coded unsaturated modulated in the laser phase modulator.

The present invention further provides a lidar distance and velocity measurement method based on the above phase coded unsaturated modulation method, comprising the steps of:

step S1: performing phase coded unsaturated modulation of a single-frequency laser,

step S2: emitting the laser signal after the phase coded unsaturated modulation and amplification, and then performing heterodyne mixing and photoelectric conversion between echo laser reflected by the target and the single frequency laser to obtain an intermediate frequency electrical signal after the heterodyne,

step S3: processing said intermediate frequency electrical signal to convert it to an intermediate frequency complex signal,

step S4: performing Fourier transform of the intermediate frequency complex signal to obtain a signal spectrum,

step S5: performing data processing of the signal spectrum obtained after the Fourier transform and the intermediate frequency complex signal to obtain velocity information and distance information, thus completing the lidar distance and velocity measurement.

Further, said step S1 further comprises pulse width modulation of the single frequency laser, the laser signal being in continuous, quasi-continuous or pulsed wave form after the pulse width modulation. The frequency shift of the laser frequency can also be performed simultaneously during the modulation process.

Further, said step S1 further comprises frequency modulation of the single frequency laser, the laser signal having a certain frequency difference from the original single-frequency laser after the frequency modulation.

Further, in said step S3, said process of converting the intermediate frequency complex signal is implemented using a hardware structure or a data processing algorithm.

Further, said step S4 further comprises the steps of:

S41: comparing the single-frequency spectral component obtained after the Fourier transform of the intermediate frequency signal with a frequency signal intensity threshold to obtain a single-frequency peak points array with greater intensity than the frequency signal intensity threshold, thereby obtaining the Doppler magnitude and direction of the relative motion between the lidar and the target,

S42: processing the single-frequency peak points array to obtain a velocity array, wherein the velocity array represents velocity information,

S43: constructing a matched filter function by using the single frequency peak points array, performing pulse compression of the matched filter function and the phase coded spectral components of the intermediate frequency complex signal, and comparing the compressed data information with a distance signal intensity threshold, and the points greater than the distance signal intensity threshold form a distance array, wherein the distance array represents distance information; and

S44: outputting the velocity array and the distance array.

The present invention further provides a lidar system for performing the above lidar distance and velocity measurement method, comprising: a laser generator, a laser phase modulator, a laser amplifier, a laser demodulator, a photodetector, a data acquisition processor and a signal generator, the laser generator being arranged to emit a single frequency laser, the laser emitting end of the laser generator being connected to the optical input of the laser demodulator and the optical input of the laser phase modulator, the signal generator for generating a phase coded modulated electrical signal, the electrical signal output of the signal generator being connected to the signal input of the laser phase modulator, said single frequency laser being phase coded unsaturated modulated in said laser phase modulator, the optical output of the laser phase modulator is connected to the optical input of the laser amplifier, the optical output of the laser amplifier is connected to an optical transceiver circuit, the optical transceiver circuit is arranged to emit the laser signal generated by the laser amplifier and to introduce a received echo signal reflected by the target into the optical input of the laser demodulator, the optical output of the laser demodulator is connected to the photodetector, and the photodetector is connected to the data acquisition processor.

Further, a pulse width modulator may be provided, said width modulator is provided between said laser generator and said laser phase modulator, and the pulse width modulator may also be provided with the function of shifting the frequency of the laser signal.

Further, a circulator may be provided, said circulator is provided between said laser amplifier and said optical transceiver circuit.

The present invention has the following beneficial effects:

1) the relative motion velocity and distance information between the target and the platform can be obtained simultaneously using the phase-coded unsaturated modulated signal, and the velocity/Doppler dimension detection can be obtained compared with the existing phase-coded technique, further enhancing the Doppler tolerance of the existing phase-coded modulation technique.

2) The technical solution of the present invention can obtain the motion velocity information of the target even when the echo signal has a very low signal-to-noise ratio (<0dB), and the detection sensitivity of the system is higher compared with the existing techniques using a scheme for detecting motion velocity by multiplying intermediate frequency orthogonal phase coded signals.

(3) The unsaturated modulated signal form has the same carrier, generation time and propagation path in the velocity and distance dimensions, so the errors caused by Doppler and environmental errors on the distance velocity signal components are identical and are common-mode errors, which can be subsequently eliminated by means of signal processing.

(4) The phase-coded unsaturated modulation method only requires one Fourier transform of the echo signal to obtain the Doppler frequency of the target relative motion, which does not require a complex iterative signal processing and effectively reduces the system computation.

(5) The technical solution of the present invention adopts unsaturated modulation method, only one level of modulator can be used to complete the unsaturated phase-coded unsaturated modulation, so that the complexity of the system is significantly reduced.

## BRIEF DESCRIPTION OF THE DRAWINGS

In order to make the technical solution of the invention clear and complete, a brief description of the drawings in the description of the invention will be given below. It is obvious that the drawings in the following description are only some embodiments of the invention, and that other drawings can be obtained from these drawings without creative work for a person skilled in the art.

Fig. 1 shows a form of time domain signals after phase coded unsaturated modulation heterodyne.

Fig. 2 shows a form of frequency domain signals after phase coded unsaturated modulation heterodyne.

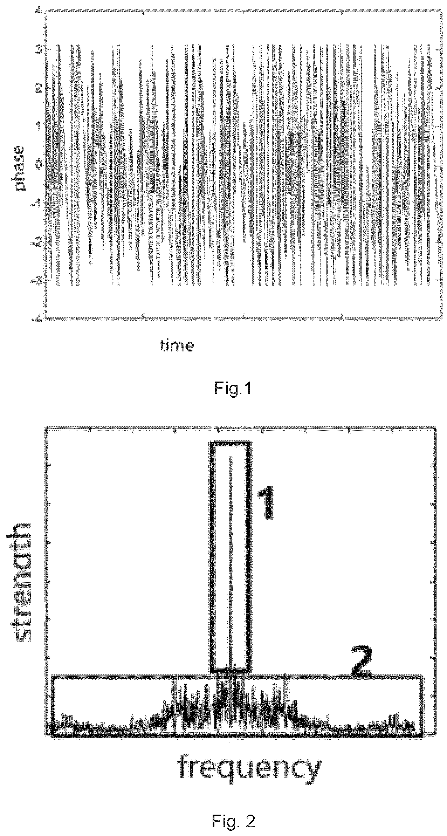

Fig. 2 is a system schematic of the phase-encoded unsaturated modulation device.

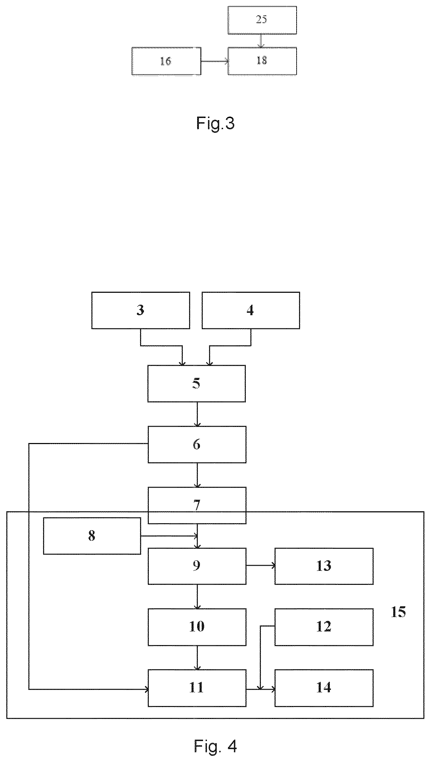

Fig. 4 is a flow chart of the lidar distance and velocity measurement method based on phase coded unsaturated modulation.

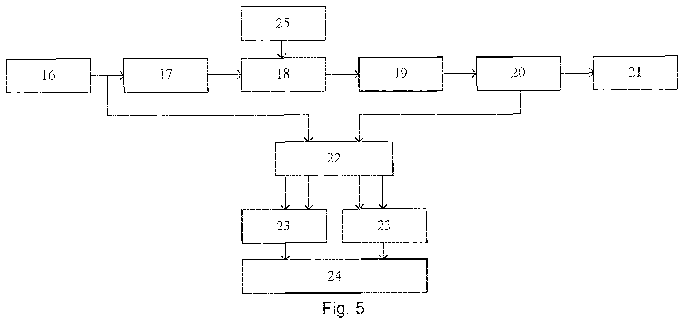

Fig. 5 is a schematic diagram of the lidar distance and velocity measurement system.

Wherein, the above drawings include the following reference signs: 1. single frequency spectrum component; 2. phase coded spectrum component; 3. single frequency laser; 4. echo laser; 5. intermediate frequency electrical signal; 6. intermediate frequency complex signal; 7. signal spectrum; 8. frequency signal intensity threshold; 9. single-frequency peak points array; 10. matched filter function; 11. pulse compression; 12. distance signal intensity threshold; 13. velocity array; 14. distance array; 15. cyclic Operation; 16. laser generator; 17. modulator; 18. laser phase modulator; 19. laser amplifier; 20. circulator; 21. optical transceiver circuit; 22. laser demodulator; 23. photodetector; 24. data acquisition processor; 25. signal generator.

## DETAILED DESCRIPTION

The technical solution of the present invention will be clearly and completely described below in combination of the drawings, and it is clear that the described embodiments are a part of the embodiments of the present invention, and not all of them. Based on the embodiments in the present invention, all other embodiments obtained by a person skilled in the art without creative work fall within the scope of protection of the present invention.

Example 1

Referring to Fig. 1-2, a phase coded unsaturated modulation method, comprising: performing phase coded modulation of a single frequency laser outputted by a laser generator 16, the phase coded modulation is in the form of two-phase or multi-phase, the modulation depth is phase unsaturated modulation, when the phase coded form is two-phase code, the phase unsaturated modulation of the signal modulation is in the form of:

$$Sig(t) = A \exp\left[ j(2\pi f_0 t + \varphi(t)) \right]$$

$$\varphi(t) = (n \pm \eta)\pi$$

wherein ▨ is an output laser modulated signal, ▨ is the amplitude of the laser signal, ▨ is the carrier frequency of the laser, ▨ is the phase modulated signal, ▨ is an integer (e.g. -1, 0 ,1...), ▨ is 0.2 ~ 0.8( preferably 0.4 ~0.6 ).

The laser signal after phase coded unsaturated modulation includes a single frequency spectral component 1 and a phase coded modulated broadband spectral component, the phase coded modulated broadband spectral component is a phase coded spectral component 2, both of the two components have the same or close energy ratio, with said single frequency spectral component 1 has an energy ratio of 40%-60%.

Example 2

Referring to Fig. 3, a phase coded unsaturated modulation apparatus, comprising: a laser generator 16, a laser phase modulator 18 and a signal generator 25, the laser generator 16 is arranged to emit a single frequency laser, the laser emitting end of the laser generator 16 is connected to the optical input of the laser phase modulator 18, the signal generator 25 is configured to generate a phase coded modulated electrical signal, the output of the signal generator 25 is connected to the signal input of the laser phase modulator 18, the single-frequency laser is phase coded unsaturated modulated in the laser phase modulator 18, and the laser signal after phase coded unsaturated modulation includes a single-frequency spectral component and a phase-coded modulated broadband spectral component, and the energy ratio of the two components is the same or close to each other.

Example 3

Referring to Fig. 4, a lidar distance and velocity measurement method, specifically comprises the following steps:

Step S1: performing phase-coded unsaturated modulation of the single-frequency laser outputted by the laser generator 16 using the method in Example 1. Step S1 further comprises performing pulse width modulation and frequency modulation of the single frequency laser outputted by the laser generator 16.

Step S2: emitting the laser signal after phase coded unsaturation modulation and amplification, and then performing heterodyne mixing and photoelectric conversion between echo laser 4 reflected by the target and the single frequency laser 3 to obtain an intermediate frequency electrical signal 5 after the heterodyne, processing said intermediate frequency electrical signal to convert it to an intermediate frequency complex signal 6.

The process of laser demodulation 5 can be implemented using a hardware structure such as an quadrature demodulator or with a 3 dB coupler combined with a data processing algorithm such as Hilbert transform.
Step S3: Performing Fourier transform of the intermediate frequency complex signal 6 to obtain a signal spectrum 7.
Step S4: Performing data processing on the signal spectrum 7 obtained after the Fourier transform and the intermediate frequency complex signal 6 to obtain velocity information and distance information, thus completing the Lidar distance and velocity measurement.
The data processing in step S4 specifically includes the following steps:

S41: comparing the single-frequency spectral component of said signal spectrum 7 obtained after Fourier transform with a frequency signal intensity threshold 8 to obtain a single-frequency peak points array 9 with greater intensity than the frequency signal intensity threshold 8, thereby obtaining the Doppler magnitude and direction of the relative motion between the lidar and the target,

S42: processing the single-frequency peak point array 9 to obtain a velocity array 13, wherein the velocity array 13 represents velocity information,

S43: constructing a matched filter function 10 by using elements of the single frequency peak points array 9, performing pulse compression 11 of the matched filter function 10 and the phase coded spectral components in the intermediate frequency complex signal 6, and comparing the compressed data information with a distance signal intensity threshold 12, and the points greater than the distance signal intensity threshold 12 form a distance array 14, wherein the distance array 14 represents distance information; and

S44: outputting the velocity array 13 and the distance array 14.

Example 4

Referring to Fig. 5, a lidar system for performing the lidar distance and velocity measurement method in Example 3, specifically comprising the following components: a laser generator 16, a laser phase modulator 18, a laser amplifier 19, an optical transceiver circuit 21, a laser demodulator 22, a photodetector 23, a data acquisition processor 24, a signal generator 25.

The laser generator 16 is used to emit a single frequency laser, the laser emitting end of the laser generator 16 is connected to the optical input of the laser phase modulator 18 and the optical input of the laser demodulator 22, the signal generator 25 is used to emit phase coded modulated electrical signal, the signal output of the signal generator 25 is connected to the signal input of the laser phase modulator 18, the single frequency laser is phase coded unsaturated modulated in the laser phase modulator 18, the laser signal after phase coded unsaturated modulation includes a single frequency spectral component and a phase coded modulated broadband spectral component, and the energy ratio of the two components is the same or close to each other.

The optical output of the laser phase modulator 18 is connected to the optical input of the laser amplifier 19, and the optical output of the laser amplifier 19 is connected to the optical transceiver circuit 21, and optical transceiver circuit 21 transmits the laser signal generated by the laser amplifier 19, and at the same time introduces the received echo signal 4 reflected by the target into the optical input of the laser demodulator 22, and the optical output of the laser demodulator 22 is connected to the photodetector 23, and the photodetector 23 is connected to the data acquisition processor 24, and the optical transceiver circuit 21 is a device used for laser emitting and echo laser reception.

The above lidar system may also be provided with a modulator 17, said modulator 17 is arranged between said laser generator 16 and said laser phase modulator 18, or between said laser generator 16 and said laser demodulator 22.

The modulator 17 is a pulse width modulator, wherein the laser signal is in continuous, quasi-continuous or pulsed wave form after the pulse width modulation; or the modulator 17 is a pulse frequency modulator, wherein the input laser signal can be frequency modulated; or the modulator 17 is a pulse width frequency modulator, wherein the input laser signal can be pulse width modulated and frequency modulated at the same time.

The above lidar system may also be provided with a circulator 20, said circulator 20 is provided between said laser amplifier 19 and said optical transceiver circuit 21.

The laser demodulator 22 can use quadrature demodulation to obtain a 4-way optical mixing signal with a phase difference of 90°, or 3dB coupling to obtain a 2-way optical mixing signal with a phase difference of 180°.

If the laser demodulator 22 is a quadrature demodulator, two photoelectric detectors 23 need to be connected, signals with a phase difference of 0° and 180° enter into one detector and signals with a phase difference of 90° and 270° enter into another detector.

If the laser demodulator 22 is a 3dB coupler, one photodetector 23 needs to be connected.

The single-frequency laser outputted by the laser generator 16 is modulated by the pulse width/frequency modulator 17 and then enters the laser phase modulator 18 for phase-coded unsaturated modulation, the laser signal after the phase-coded unsaturated modulation enters into the circulator 20 through the laser amplifier 19, the circulator 20 is connected to the optical transceiver circuit 21 for laser emission, the target reflected echo signal received by the optical transceiver circuit 21 is connected to the circulator 20 to form an echo laser 4. The single-frequency laser 3 and the echo laser 4 enter laser demodulator 22 for heterodyne demodulation, and the demodulated laser signal enters the photodetector 23 and data acquisition processor 24 for signal processing.

The laser demodulator 22 in the heterodyne demodulation process can be a quadrature demodulator to obtain a four-way optical signal with a phase difference of 90°, or a 3dB coupler to obtain a two-way optical signal with a phase difference of 180°.

**Claims**

1.    A phase coded unsaturated modulation method for phase coded modulation of a single frequency laser, wherein the phase coded modulation is two-phase or multi-phase, and modulation depth is phase unsaturated modulation, **characterized in that**: when the phase coded modulation is a two-phase code, the signal modulation is:

$$Sig(t) = A \exp\left[ j(2\pi f_0 t + \varphi(t)) \right]$$

$$\varphi(t) = (n \pm \eta)\pi$$

wherein *Sig(t)* is an output laser modulated signal, *A* is the amplitude of the laser signal, $f_0$ is the carrier frequency of the laser, $\varphi(t)$ is the phase modulated signal, $n$ is an integer, $\eta$ is 0.2 ~ 0.8.

2. The phase coded unsaturated modulation method according to claim 1, wherein after the phase coded unsaturated modulation, the laser signal comprises a single-frequency spectral component and a phase coded modulated broadband spectral component with the same or close energy ratio, wherein the phase coded modulated broadband spectral component is a phase coded spectral component.

3. The phase coded unsaturated modulation method according to claim 2, wherein the energy ratio of the single-frequency spectral components is 40%-60%.

4. A phase coded unsaturated modulation apparatus for implementing the phase coded unsaturated modulation method of any one of claims 1-3, comprising: a laser generator, a laser phase modulator and a signal generator, the laser generator is configured to emit a single frequency laser, the laser emitting end of the laser generator is connected to the optical input of the laser phase modulator, the signal generator is configured to generate a phase coded modulated electrical signal, the electrical signal output of the signal generator is connected to the signal input of the laser phase modulator, said single frequency laser is phase coded unsaturated modulated in the laser phase modulator.

5. A lidar distance and velocity measurement method based on the phase coded unsaturated modulation method of any one of claims 1-3, comprising the steps of:

   step S1: performing phase coded unsaturated modulation of a single-frequency laser,
   step S2: emitting the laser signal after the phase coded unsaturated modulation and amplification, and then performing heterodyne mixing and photoelectric conversion between echo laser reflected by the target and the single frequency laser to obtain an intermediate frequency electrical signal after the heterodyne,
   step S3: processing said intermediate frequency electrical signal to convert it to an intermediate frequency complex signal,
   step S4: performing Fourier transform of the intermediate frequency complex signal to obtain a signal spectrum,
   Step S5: performing data processing of the signal spectrum obtained after the Fourier transform and the intermediate frequency complex signal to obtain velocity information and distance information, thus completing the lidar distance and velocity measurement.

6. The lidar distance and velocity measurement method according to claim 5, wherein said step S1 further comprising pulse width modulation of the single frequency laser, the laser signal being in continuous, quasi-continuous or pulsed wave form after the pulse width modulation; or said step S1 further comprising frequency modulation of the single frequency laser, the laser signal having a certain frequency difference from the original single-frequency laser after the frequency modulation.

7. The lidar distance and velocity measurement method according to claim 5, wherein in said step S2, said process of obtaining the intermediate frequency complex signal is implemented using a hardware optical circuit structure or a data processing algorithm.

8. The lidar distance and velocity measurement method according to claim 5, wherein said step S4 further comprising the steps of:

   S41: comparing the single-frequency spectral component of said signal spectrum with a frequency signal intensity threshold to obtain a single-frequency peak points array with greater intensity than the frequency signal intensity threshold, thereby obtaining the Doppler magnitude and direction of the relative motion between the lidar and the target,
   S42: processing the single-frequency peak points array to obtain a velocity array, wherein the velocity array represents velocity information,
   S43: constructing a matched filter function by using the single frequency peak points array, performing pulse compression of the matched filter function and the phase coded spectral components in the intermediate frequency complex signal, and comparing the compressed data information with a distance signal intensity threshold, and the points greater than the distance signal intensity threshold form a distance array, wherein the distance array represents distance information; and
   S44: outputting the velocity array and the distance array.

9. A lidar system for performing the lidar distance and velocity measurement method of claim 5, comprising: a laser generator (16), a laser phase modulator (18), a laser amplifier (19), a laser demodulator (22), a photodetector (23), a data acquisition processor (24) and a signal generator (25), the laser generator (16) being arranged to emit a single frequency laser, the laser emitting end of the laser generator (16) being connected to the optical input of the laser demodulator (22) and the optical input of the laser phase modulator (18), the signal generator (25) for generating a phase coded modulated electrical signal, the electrical signal output of the signal generator (25) being connected to the signal input of the laser phase modulator (18), said single frequency laser being phase coded unsaturated modulated in said laser phase modulator (18), the optical output of the laser phase modulator (18) is connected to the optical input of the laser amplifier (19), the optical output of the laser amplifier (19) is connected to an optical transceiver circuit (21), the optical transceiver circuit (21) is arranged to emit the laser signal generated by the laser amplifier (19) and to introduce a received echo signal (4) reflected by the target into the optical input of the laser demodulator (22), the optical output of the laser demodulator (22) is connected to the photodetector (23), and the photodetector (23) is connected to the data acquisition processor (24).

10. The lidar system according to claim 9, wherein the laser demodulator (22) is an quadrature demodulator connected simultaneously with two photodetectors (23); or the laser demodulator (22) is a 3dB coupler connected to a photodetector (23).

11. The lidar system according to claim 9, further comprising a modulator (17), said modulator (17) being provided between said laser generator (16) and said laser phase modulator (18), or between said laser generator (16) and said laser demodulator (22).

12. The lidar system according to claim 11, wherein said modulator (17) is one of: a pulse width modulator, a pulse frequency modulator, and a pulse width frequency modulator.

13. The lidar system according to claim 9, further comprising a circulator (20), said circulator (20) being provided between said laser amplifier (19) and said optical transceiver circuit (21).

**Patentansprüche**

1. Verfahren zur phasencodierten ungesättigten Modulation zur phasencodierten Modulation eines Einfrequenzlasers, wobei die phasencodierte Modulation zweiphasig oder mehrphasig ist und die Modulationstiefe eine phasenungesättigte Modulation ist, **dadurch gekennzeichnet, dass**: wenn die phasencodierte Modulation ein zweiphasiger Code ist, die Signalmodulation wie folgt ist:

$$Sig(t) = A \exp\left[j(2\pi f_0 t + \varphi(t))\right]$$

$$\varphi(t) = (n \pm \eta)\pi$$

wobei *Sig(t)* ein moduliertes Laserausgangssignal ist, *A* die Amplitude des Lasersignals ist, $f_0$ die Trägerfrequenz des Lasers ist, $\varphi(t)$ das phasenmodulierte Signal ist, *n* eine ganze Zahl ist, $\eta$ 0,2 ~ 0,8 ist.

2. Verfahren zur phasencodierten ungesättigten Modulation nach Anspruch 1, wobei nach der phasencodierten ungesättigten Modulation das Lasersignal eine Einfrequenzspektralkomponente und eine phasencodierte modulierte Breitbandspektralkomponente mit dem gleichen oder einem nahen Energieverhältnis umfasst, wobei die phasencodierte modulierte Breitbandspektralkomponente eine phasencodierte Spektralkomponente ist.

3. Verfahren zur phasencodierten ungesättigten Modulation nach Anspruch 2, wobei das Energieverhältnis der Einfrequenzspektralkomponenten 40 % - 60 % beträgt.

4. Einrichtung zur phasencodierten ungesättigten Modulation zum Implementieren des Verfahrens zur phasencodierten ungesättigten Modulation nach einem der Ansprüche 1 - 3, umfassend: einen Lasergenerator, einen Laserphasenmodulator und einen Signalgenerator, der Lasergenerator dazu konfiguriert ist, einen Einfrequenzlaser zu emittieren, das laseremittierende Ende des Lasergenerators mit dem optischen Eingang des Laserphasenmodulators verbunden ist, der Signalgenerator dazu konfiguriert ist, ein phasencodiertes moduliertes elektrisches Signal zu erzeugen, der Ausgang für elektrische Signale des Signalgenerators mit dem Signaleingang des Laserphasenmodulators verbunden ist, der Einfrequenzlaser im Laserphasenmodulator phasencodiert ungesättigt moduliert wird.

5. Verfahren zur Lidar-Distanz- und -Schnelligkeitsmessung basierend auf dem Verfahren zur phasencodierten ungesättigten Modulation nach einem der Ansprüche 1-3, umfassend die folgenden Schritte:

Schritt S1: Durchführen einer phasencodierten ungesättigten Modulation eines Einfrequenzlasers,
Schritt S2: Emittieren des Lasersignals nach der phasencodierten ungesättigten Modulation und Verstärkung und dann Durchführen einer Heterodyn-Mischung und photoelektrischen Umwandlung zwischen dem durch das Ziel reflektierten Echolaser und dem Einfrequenzlaser, um ein elektrisches Zwischenfrequenzsignal nach dem Heterodyn zu erlangen,
Schritt S3: Verarbeiten des elektrischen Zwischenfrequenzsignals, um es in ein komplexes Zwischenfrequenzsignal umzuwandeln,

Schritt S4: Durchführen einer Fourier-Transformation des komplexen Zwischenfrequenzsignals, um ein Signalspektrum zu erlangen,

Schritt S5: Durchführen einer Datenverarbeitung des Signalspektrums, das nach der Fourier-Transformation erlangt wird, und des komplexen Zwischenfrequenzsignals, um Schnelligkeitsinformationen und Distanzinformationen zu erlangen, wodurch die Lidar-Distanz- und -Schnelligkeitsmessung vollendet wird.

6. Verfahren zur Lidar-Distanz- und -Schnelligkeitsmessung nach Anspruch 5, wobei der Schritt S1 ferner eine Pulsbreitenmodulation des Einfrequenzlasers umfassend, wobei das Lasersignal nach der Pulsbreitenmodulation in kontinuierlicher, quasi-kontinuierlicher oder gepulster Wellenform vorliegt; oder der Schritt S1 ferner eine Frequenzmodulation des Einfrequenzlasers umfasst, wobei das Lasersignal nach der Frequenzmodulation eine gewisse Frequenzdifferenz zu dem ursprünglichen Einfrequenzlaser aufweist.

7. Verfahren zur Lidar-Distanz- und -Schnelligkeitsmessung nach Anspruch 5, wobei in dem Schritt S2 der Prozess des Erlangens des komplexen Zwischenfrequenzsignals unter Verwendung einer optischen Hardware-Schaltstruktur oder eines Datenverarbeitungsalgorithmus implementiert wird.

8. Verfahren zur Lidar-Distanz- und -Schnelligkeitsmessung nach Anspruch 5, wobei der Schritt S4 ferner die folgenden Schritte umfasst:

S41: Vergleichen der Einfrequenzspektralkomponente des Signalspektrums mit einem Frequenzsignalintensitätsschwellenwert, um ein Einfrequenz-Spitzenpunktarray mit einer größeren Intensität als dem Frequenzsignalintensitätsschwellenwert zu erlangen, wodurch die Dopplergröße und -richtung der Relativbewegung zwischen dem Lidar und dem Ziel erlangt wird,

S42: Verarbeiten des Einfrequenz-Spitzenpunktarrays, um ein Schnelligkeitsarray zu erlangen, wobei das Schnelligkeitsarray Schnelligkeitsinformationen darstellt,

S43: Konstruieren einer angepassten Filterfunktion unter Verwendung des Einfrequenzspitzenpunktarrays, Durchführen einer Pulskompression der angepassten Filterfunktion und der phasencodierten Spektralkomponenten in dem komplexen Zwischenfrequenzsignal und Vergleichen der komprimierten Dateninformationen mit einem Distanzsignalintensitätsschwellenwert, und wobei die Punkte, die größer als der Distanzsignalintensitätsschwellenwert sind, ein Distanzarray ausbilden, wobei das Distanzarray Distanzformationen darstellt; und

S44: Ausgeben des Schnelligkeitsarrays und des Distanzarrays.

9. Lidar-System zum Durchführen des Verfahrens zur Lidar-Distanz- und -Schnelligkeitsmessung nach Anspruch 5, umfassend: einen Lasergenerator (16), einen Laserphasenmodulator (18), einen Laserverstärker (19), einen Laserdemodulator (22), einen Photodetektor (23), einen Datenerfassungsprozessor (24) und einen Signalgenerator (25), wobei der Lasergenerator (16) so angeordnet ist, dass er einen Einfrequenzlaser emittiert, das laseremittierende Ende des Lasergenerators (16) mit dem optischen Eingang des Laserdemodulators (22) und dem optischen Eingang des Laserphasenmodulators (18) verbunden ist, der Signalgenerator (25) zum Erzeugen eines phasencodierten modulierten elektrischen Signals dient, der Ausgang für elektrische Signale des Signalgenerators (25) mit dem Signaleingang des Laserphasenmodulators (18) verbunden ist, wobei der Einfrequenzlaser im Laserphasenmodulator (18) phasencodiert ungesättigt moduliert wird, der optische Ausgang des Laserphasenmodulators (18) mit dem optischen Eingang des Laserverstärkers (19) verbunden ist, der optische Ausgang des Laserverstärkers (19) mit einer optischen Transceiver-Schaltung (21) verbunden ist, die optische Transceiver-Schaltung (21) angeordnet ist, um das durch den Laserverstärker (19) erzeugte Lasersignal zu emittieren und ein durch das Ziel reflektiertes empfangenes Echosignal (4) in den optischen Eingang des Laserdemodulators (22) einzuleiten, der optische Ausgang des Laserdemodulators (22) mit dem Photodetektor (23) verbunden ist und der Photodetektor (23) mit dem Datenerfassungsprozessor (24) verbunden ist.

10. Lidar-System nach Anspruch 9, wobei der Laserdemodulator (22) ein Quadraturdemodulator ist, der gleichzeitig mit zwei Photodetektoren (23) verbunden ist; oder der Laserdemodulator (22) ein 3-dB-Koppler ist, der mit einem Photodetektor (23) verbunden ist.

11. Lidar-System nach Anspruch 9, ferner umfassend einen Modulator (17), wobei der Modulator (17) zwischen dem Lasergenerator (16) und dem Laserphasenmodulator (18) oder zwischen dem Lasergenerator (16) und dem Laserdemodulator (22) bereitgestellt ist.

12. Lidar-System nach Anspruch 11, wobei der Modulator (17) einer von Folgenden ist: ein Pulsbreitenmodulator, ein Pulsfrequenzmodulator und ein Pulsbreitenfrequenzmodulator.

**13.** Lidar-System nach Anspruch 9, ferner umfassend einen Zirkulator (20), wobei der Zirkulator (20) zwischen dem Laserverstärker (19) und der optischen Transceiver-Schaltung (21) bereitgestellt ist.

## Revendications

**1.** Procédé de modulation insaturée codée en phase pour la modulation codée en phase d'un laser monofréquence, dans lequel la modulation codée en phase est biphasée ou multiphasée, et une profondeur de modulation est une modulation insaturée en phase, **caractérisé en ce que** : lorsque la modulation codée en phase est un code biphasé, la modulation de signal est :

$$Sig(t) = A \exp\left[j(2\pi f_0 t + \varphi(t))\right]$$

$$\varphi(t) = (n \pm \eta)\pi$$

dans lequel *Sig(t)* est un signal modulé par laser de sortie, *A* est l'amplitude du signal laser, $f_0$ est la fréquence porteuse du laser, $\varphi(t)$ est le signal modulé en phase, *n* est un nombre entier, $\eta$ est 0,2 ~ 0,8.

**2.** Procédé de modulation insaturée codée en phase selon la revendication 1, dans lequel, après la modulation insaturée codée en phase, le signal laser comprend une composante spectrale monofréquence et une composante spectrale à large bande modulée codée en phase avec le même rapport d'énergie ou un rapport d'énergie proche, dans lequel la composante spectrale à large bande modulée codée en phase est une composante spectrale codée en phase.

**3.** Procédé de modulation insaturée codée en phase selon la revendication 2, dans lequel le rapport d'énergie des composantes spectrales monofréquence est de 40 % à 60 %.

**4.** Appareil de modulation insaturée codée en phase destiné à mettre en œuvre le procédé de modulation insaturée codée en phase selon l'une quelconque des revendications 1 à 3, comprenant : un générateur de laser, un modulateur de phase laser et un générateur de signal, le générateur de laser est configuré pour émettre un laser monofréquence, l'extrémité d'émission de laser du générateur de laser est connectée à l'entrée optique du modulateur de phase laser, le générateur de signal est configuré pour générer un signal électrique modulé codé en phase, la sortie de signal électrique du générateur de signal est connectée à l'entrée de signal du modulateur de phase laser, ledit laser monofréquence est modulé insaturé codé en phase dans le modulateur de phase laser.

**5.** Procédé de mesure de distance et de vitesse lidar sur la base du procédé de modulation insaturée codée en phase de l'une quelconque des revendications 1 à 3, comprenant les étapes suivantes :

étape S1 : réalisation d'une modulation insaturée codée en phase d'un laser monofréquence,
étape S2 : émission du signal laser après la modulation et l'amplification insaturée codée en phase, puis la réalisation d'un mélange hétérodyne et d'une conversion photoélectrique entre un laser d'écho réfléchi par la cible et le laser monofréquence pour obtenir un signal électrique de fréquence intermédiaire après l'hétérodyne,
étape S3 : traitement dudit signal électrique à fréquence intermédiaire pour le convertir en un signal complexe à fréquence intermédiaire,
étape S4 : réalisation d'une transformée de Fourier du signal complexe à fréquence intermédiaire pour obtenir un spectre de signal,
étape S5 : réalisation d'un traitement de données du spectre de signal obtenu après la transformée de Fourier et du signal complexe à fréquence intermédiaire pour obtenir des informations de vitesse et des informations de distance, complétant ainsi la mesure de distance et de vitesse lidar.

**6.** Procédé de mesure de distance et de vitesse lidar selon la revendication 5, dans lequel ladite étape S1 comprenant en outre modulation de largeur d'impulsion du laser monofréquence, le signal laser étant sous une forme d'onde continue, quasi-continue ou pulsée après la modulation de largeur d'impulsion ; ou ladite étape S1 comprend en outre une modulation de fréquence du laser monofréquence, le signal laser présentant une certaine différence de fréquence par rapport au laser monofréquence d'origine après la modulation de fréquence.

**7.** Procédé de mesure de distance et de vitesse lidar selon la revendication 5, dans lequel, à ladite étape S2, ledit processus d'obtention du signal complexe à fréquence intermédiaire est mis en œuvre à l'aide d'une structure de circuit optique matériel ou d'un algorithme de traitement de données.

**8.** Procédé de mesure de distance et de vitesse lidar selon la revendication 5, dans lequel ladite étape S4 comprend en outre les étapes suivantes :

S41 : comparaison de la composante spectrale monofréquence dudit spectre de signal avec un seuil d'intensité de signal de fréquence pour obtenir un tableau de points de crête monofréquence avec une intensité supérieure au seuil d'intensité de signal de fréquence, obtenant ainsi l'amplitude Doppler et la direction du mouvement relatif entre le lidar et la cible,

S42 : traitement du tableau de points de crête monofréquence pour obtenir un tableau de vitesses, dans lequel le tableau de vitesses représente des informations de vitesse,

S43 : construction d'une fonction de filtre mis en correspondance à l'aide du tableau de points de crête monofréquence, la réalisation d'une compression d'impulsion de la fonction de filtre mis en correspondance et des composantes spectrales codées en phase dans le signal complexe à fréquence intermédiaire, et la comparaison des informations de données comprimées avec un seuil d'intensité de signal de distance, et les points supérieurs au seuil d'intensité de signal de distance forment un tableau de distances, dans lequel le tableau de distances représente des informations de distance ; et

S44 : la délivrance en sortie du tableau de vitesses et du tableau de distances.

9. Système lidar destiné à réaliser le procédé de mesure de distance et de vitesse lidar de la revendication 5, comprenant : un générateur de laser (16), un modulateur de phase laser (18), un amplificateur de laser (19), un démodulateur de laser (22), un photodétecteur (23), un processeur d'acquisition de données (24) et un générateur de signal (25), le générateur de laser (16) étant agencé pour émettre un laser monofréquence, l'extrémité d'émission de laser du générateur de laser (16) étant connectée à l'entrée optique du démodulateur de laser (22) et à l'entrée optique du modulateur de phase laser (18), le générateur de signal (25) étant destiné à générer un signal électrique modulé codé en phase, la sortie de signal électrique du générateur de signal (25) étant connectée à l'entrée de signal du modulateur de phase laser (18), ledit laser monofréquence étant modulé insaturé codé en phase dans ledit modulateur de phase laser (18), la sortie optique du modulateur de phase laser (18) est connectée à l'entrée optique de l'amplificateur de laser (19), la sortie optique de l'amplificateur de laser (19) est connectée à un circuit émetteur-récepteur optique (21), le circuit émetteur-récepteur optique (21) est agencé pour émettre le signal laser généré par l'amplificateur de laser (19) et pour introduire un signal d'écho (4) reçu réfléchi par la cible dans l'entrée optique du démodulateur de laser (22), la sortie optique du démodulateur de laser (22) est connectée au photodétecteur (23), et le photodétecteur (23) est connecté au processeur d'acquisition de données (24).

10. Système lidar selon la revendication 9, dans lequel le démodulateur de laser (22) est un démodulateur en quadrature connecté simultanément à deux photodétecteurs (23) ; ou le démodulateur de laser (22) est un coupleur 3 dB connecté à un photodétecteur (23).

11. Système lidar selon la revendication 9, comprenant en outre un modulateur (17), ledit modulateur (17) étant ménagé entre ledit générateur de laser (16) et ledit modulateur de phase laser (18), ou entre ledit générateur de laser (16) et ledit démodulateur de laser (22).

12. Système lidar selon la revendication 11, dans lequel ledit modulateur (17) est l'un parmi : un modulateur de largeur d'impulsion, un modulateur de fréquence d'impulsion et un modulateur de fréquence de largeur d'impulsion.

13. Système lidar selon la revendication 9, comprenant en outre un circulateur (20), ledit circulateur (20) étant ménagé entre ledit amplificateur de laser (19) et ledit circuit émetteur-récepteur optique (21).

Fig.1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109541636 A

**Non-patent literature cited in the description**

- Signal Processing and Performance Analyzing of Phase-coded Radar. SHENG JIANFENG, June 2004